# EUROPEAN PATENT SPECIFICATION

(11) **EP 0 350 708 B1**
(45) Date of publication and mention of the grant of the patent: **20.01.1993**
(21) Application number: 89111672.5
(22) Date of filing: 27.06.1989
(51) Int. Cl.: B60R 22/00, B60R 22/12

(54) **Webbing for vehicle seat belt system**
Gurtband für Fahrzeugsicherheitsgurtsystem
Bande pour système de ceinture de sécurité pour véhicule

(30) Priority: 12.07.1988 JP 92189/88 U
(43) Date of publication of application: 17.01.1990
(73) Proprietor: Nippon Seiko Kabushiki Kaisha, Tokyo 141 (JP)
(72) Inventor: Hatano, Hirotaka, Yokohama Kanagawa (JP); Higuchi, Yukio, Yokohama Kanagawa (JP)
(74) Representative: Klingseisen, Franz, Dipl.-Ing.

(56) References cited:
- WO-A-82/02894
- DE-A- 3 643 697
- FR-A- 2 298 557
- GB-A- 2 003 490
- US-A- 4 125 678

## Description

### BACKGROUND OF THE INVENTION

### 1) Field of the Invention:

This invention relates to an improvement in an indicator portion of a webbing suitable for use in a vehicle seat belt system or the like, said portion being used to show necessary information such as the regulation number and manufacturer's name of the seat belt system.

### 2) Description of the Related Art:

A webbing for a vehicle seat belt system or the like is generally required to show, at a suitable area thereof, necessary information such as the number of the regulation with which it complies, the manufacturer's name and the year of manufacture.

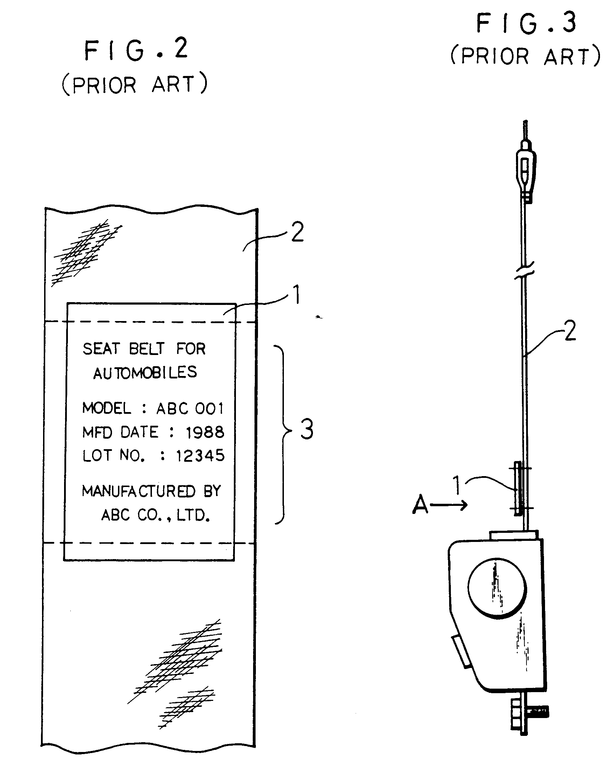

Accordingly, in conventional webbings, these details are printed on a label 1, for example, a piece of cloth, and the thus-printed label then sewn on a webbing 2, as illustrated in FIG. 3 and FIG. 2 which is an enlarged fragmentary plan view as seen in the direction indicated by arrow A in FIG. 3 (see also DE-A-3 643 697).

In the case of a seat belt system using a webbing with such a label, the webbing contains steplike offsets where the label is attached, so that a rumbling or otherwise unpleasant sound results whenever the webbing is wound in or out.

Because of the need for sewing a label on each webbing, conventional webbings have the drawbacks that they require more parts and more manufacturing steps.

### SUMMARY OF THE INVENTION

An object of this invention is to solve the above drawbacks of conventional webbings.

In one aspect of this invention, there is thus provided a webbing for a vehicle seat belt system, which comprises information printed thereon with a high energy radiation curing ink, preferably, an ultraviolet curing ink.

In another aspect of this invention, there is also provided a process for the production of a webbing bearing information applied thereon, said webbing being suitable for use in a vehicle seat belt system. The process comprises printing the information on the webbing with a high energy radiation curing ink and then exposing the thus-printed ink to high energy radiation for a time sufficient to cure and dry the same.

In the webbing according to this invention, information such as the regulation number and manufacturer's name has been printed with a high energy radiation curing ink, preferably, an ultraviolet curing ink. It is hence no longer necessary to sew a label carrying such information onto the webbing. The webbing is therefore smooth, free of stepwise offsets so that there is no rumbling or other unpleasant sound when it is wound in or out. In addition, the webbing of this invention requires neither label nor sewing. Accordingly, it is possible to reduce the numbers of parts and steps for its manufacture. Furthermore, use of a high energy radiation curing ink, especially an ultraviolet curing ink has made it possible to shorten the time required for drying an ink and also to obviate heating for drying the ink. It is therefore possible to print webbings at a high level of efficiency without subjecting them to thermal degradation.

### BRIEF DESCRIPTION OF THE DRAWINGS

The above and other objects, features and advantages of the present invention will become apparent from the following description and the appended claims, taken in conjunction with the accompanying drawings, in which:
FIG. 1 is a plan view of a webbing according to one embodiment of this invention;
FIG. 2 is an enlarged fragmentary plan view of a conventional webbing as seen in the direction indicated by arrow A in FIG. 3;
FIG. 3 is a side view of a seat belt system having the conventional webbing of FIG. 2; and
FIG. 4 is a simplified front elevation of a printing and curing apparatus for an ultraviolet curing ink, as employed in one example of the process of this invention.

### DETAILED DESCRIPTION OF THE INVENTION AND PREFERRED EMBODIMENTS

A webbing for a seat belt system is manufactured by weaving synthetic threads such as nylon and/or polyester threads on a needle loom or the like, dyeing the thus-woven product and then treating its surfaces with an oil formulation to reduce its frictional resistance.

Using a high energy radiation curing ink, the webbing is then printed with such necessary information as its regulation number, regulation name, year of manufacture and manufacturer's name.

Typical high energy radiation curing inks include electron radiation curing inks, and those which are light cured, i.e., photo-setting inks. Of these, ultraviolet curing inks are particularly preferred. They are formed by adding a halogenated hydrocarbon, a peroxide, a curing accelerator, an organosulfur compound, etc. to an oil varnish.

The printing of the webbing can be performed by a suitable known printing method. Since the webbing has a very rough surface, it is preferable to use pad printing. When using "Dai Cure" (trade mark, product of DAINIPPON INK AND CHEMICALS, INC.) as an ultraviolet curing ink by pad printing, the ink may be applied to a desired thickness. The ink thickness is usually about 1-10 µm, with about 5 µm being preferred. The printed portion of the webbing is next exposed to ultraviolet rays to cure and dry the ultraviolet curing ink. This curing and drying of the ink is achieved usually by employing one or more mercury vapor lamps of from about 500 W to about 2 KW output, maintaining the webbing-lamp distance within 200 mm, and irradiating ultraviolet rays for about 3-10 seconds.

For optimum labor economy and productivity, it is desirable to perform the above printing and curing steps as continuous steps by means of an endless conveyor equipped with many jigs, each adapted to hold a webbing thereon during the printing and curing steps. The high energy radiation curing ink is quick-drying and is therefore suitable for both printing and curing in a continuous process, as described above.

Webbings are usually printed one by one after being cut into a predetermined length. It is however possible to print a long webbing material, which has been woven on a needle loom or the like, with necessary information at intervals corresponding to the length of each webbing and then to cut the thus-printed long webbing material at the same intervals.

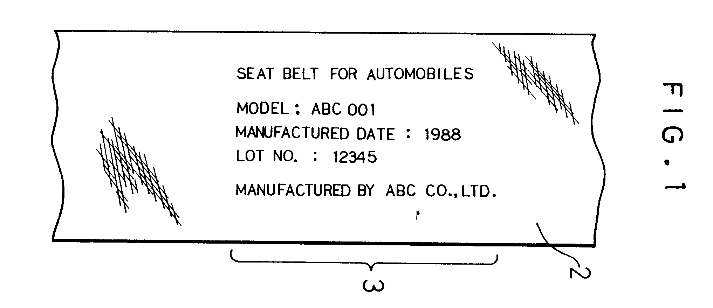

The webbing according to one embodiment of this invention will hereinafter be described with reference to FIG. 1. A webbing 2 for a seat belt system has been provided by weaving nylon threads and polyester threads as raw threads on a needle loom, dyeing the resultant woven product, coating its surfaces with an oil formulation, and then cutting same into a predetermined length.

The webbing 2 carries necessary information 3 - such as the number and name of its regulation, the year of its manufacture and its manufacturer's name - printed with "Dai Cure" (trade mark; product of DAINIPPON INK & CHEMICALS, INC.) as an ultraviolet curing ink.

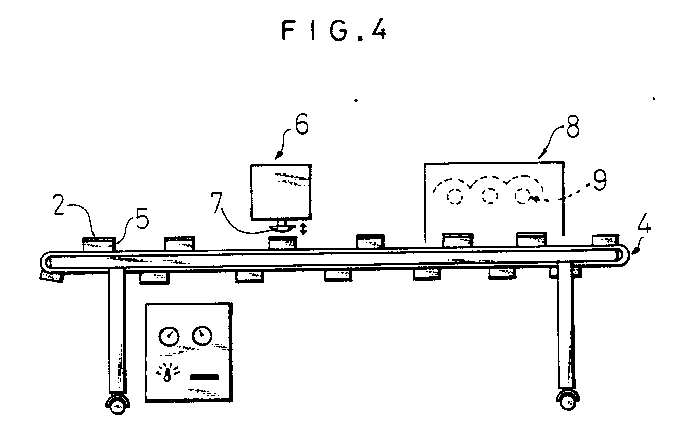

The production process of the webbing 2 with the necessary information 3 printed thereon with the ultraviolet curing ink will next be described with reference to FIG. 4.

Webbings 2 which have been cut into the predetermined length were individually fixed on jigs 5 arranged movably on a conveyor 4. Each jig 5 with its corresponding webbing 2 fixed thereon travelled to a point immediately below a pad printer indicated at numeral 6, where it stopped. The pad printer 6 has a metal-made intaglio, free of illustration, corresponding to the necessary information 3. "Dai Cure" was applied to the surface of the intaglio. After wiping excess ink from the intaglio, an elastic pad 7 was pressed against the surface of the intaglio to transfer the ink to the surface of the elastic pad 7. Thereafter, the pad 7 was pressed against the webbing 2 to print the webbing 2 with the necessary information 3. The ink thickness was about 5 µm. The jig 5 with the thus-printed webbing 2 fixed thereon then travelled through an ultraviolet ray curing compartment 8, whereby the ink printed on the webbing 2 was cured and dried. The ultraviolet ray curing compartment 8 was equipped with three mercury vapor lamps 9 of 1 KW output as a light source. The distance between the webbing 2 and each lamp 9 was 100 mm. The ink printed on the webbing 2 was exposed to ultraviolet rays for 7 seconds.

## Claims

1. A webbing (2) for being wound out from or in a retractor of a vehicle seat belt system, comprising information (3) printed thereon with a high energy radiation curing ink.

2. The webbing as claimed in Claim 1, wherein the ink is an ultraviolet curing ink.

3. The webbing as claimed in Claim 1, wherein the information contains a regulation number and a manufacturer's name.

4. A process for the production of a webbing (2) bearing information (3) applied thereon, said webbing being wound out from or in a retractor of a vehicle seat belt system, which comprises printing the information with a high energy radiation curing ink on the webbing and then exposing the thus-printed ink to high energy radiation for a time sufficient to cure and dry the same.

5. The process as claimed in Claim 4, wherein the ink is an ultraviolet curing ink and the high energy radiation is ultraviolet rays.

6. The process as claimed in Claim 5, wherein the ultraviolet curing ink is applied to a thickness of 1-10 µm by pad printing; at least one mercury vapor lamp (9) of from 500 W to 2 KW output is used as an ultraviolet rays source; and the thus-printed ink is exposed to ultraviolet rays for 3-10 seconds at a webbing-lamp distance not greater than 200 mm.

## Patentansprüche

1. Gurtband (2) für ein Fahrzeugsicherheitsgurtsystem, wobei das Gurtband aus einer Rückzieheinrichtung herausgezogen oder in diese aufgewickelt wird und eine Information (3) auf dem Gurtband mit einer Farbe aufgedruckt ist, die bei hochenergetischer Strahlung aushärtet bzw. abbindet.

2. Gurtband nach Anspruch 1,
wobei die Farbe eine bei Ultraviolettstrahlung aushärtende Farbe ist.

3. Gurtband nach Anspruch 1,
wobei die Information eine Registriernummer und den Namen des Herstellers umfaßt.

4. Verfahren zum Aufbringen einer Information (3) auf einem Gurtband (2), das aus einer Rückzieheinheit abgewickelt oder in diese aufgewickelt wird und für ein Fahrzeugsicherheitsgurtsystem vorgesehen ist, wobei die Information mit einer bei hochenergetischer Strahlung aushärtenden Farbe auf dem Gurtband aufgedruckt und dann die so aufgedruckte Farbe einer hochenergetischen Strahlung für eine Zeit ausgesetzt wird, die ausreicht, um die Farbe auszuhärten und zu trocknen.

5. Verfahren nach Anspruch 4,
wobei die Farbe eine bei ultravioletter Strahlung aushärtende Farbe ist und die hochenergetische Strahlung ultraviolette Strahlen sind.

6. Verfahren nach Anspruch 5,
wobei die durch ultraviolette Strahlung aushärtende Farbe durch Kissendruck mit einer Dicke von 1-10 µm aufgebracht wird, wenigstens eine Quecksilberdampflampe (9) von 500 W bis 2 KW Leistung als ultraviolette Strahlungsquelle verwendet wird und die so aufgedruckte Farbe den ultravioletten Strahlen für 3-10 Sekunden bei einem Abstand von Gurtband und Lampe von nicht mehr als 200 mm ausgesetzt wird.

## Revendications

1. Bande (2) destinée à être enroulée ou déroulée dans un système de rappel de ceinture de sécurité pour véhicule, comprenant des informations (3) imprimées dans celle-ci avec une encre de séchage par rayonnement à haute énergie.

2. Bande selon la revendication 1, dans laquelle l'encre est une encre de séchage aux ultraviolets.

3. Bande selon la revendication 1, dans laquelle les informations contiennent un numéro de réglementation et le nom du fabricant.

4. Procédé pour la production d'une bande (2) portant des informations (3) appliquées sur celle-ci, cette bande étant enroulée ou déroulée dans un système de rappel de ceinture de sécurité d'un véhicule qui comprend l'impression des informations avec une encre de séchage à rayonnement haute énergie sur la bande et ensuite l'exposition de l'encre ainsi imprimée a un rayonnement haute énergie pendant un temps suffisant pour durcir et sécher celle-ci.

5. Procédé Selon la revendication 4, dans lequel l'encre est une encre de séchage par ultraviolets et la radiation ou rayonnement haute énergie est fournie par des rayons ultraviolets.

6. Procédé selon la revendication 5, dans lequel l'encre de séchage aux ultraviolets est appliquée sur une épaisseur d'1-10 µm par impression au tampon ; en utilisant au moins une lampe vapeur mercure (9) d'une puissance de sortie de 500 W à 2 KW en tant que source de rayons ultraviolets ; et l'encre ainsi imprimée est exposée aux rayons ultraviolets pendant 3-10 secondes, la distance entre la bande et la lampe ne dépassant pas 200 mm.
